# EUROPEAN PATENT SPECIFICATION

(11) **EP 0 803 324 B1**
(45) Date of publication and mention of the grant of the patent: **12.09.2001**
(21) Application number: 97830167.9
(22) Date of filing: 09.04.1997
(51) Int. Cl.: B24B 7/06, B24B 21/06, B23Q 7/00

(54) **A sanding machine, in particular for wooden panels**
Eine Schleifmaschine, insbesondere für Holzpaneele
Une machine à ponçer, en particulier pour des panneaux en bois

(30) Priority: 23.04.1996 IT BO960215
(43) Date of publication of application: 29.10.1997
(73) Proprietor: SCM GROUP S.p.A., 47900 Rimini (IT)
(72) Inventor: Sacchi, Paride, 47037 Rimini (IT)
(74) Representative: Lanzoni, Luciano

(56) References cited:
- DE-U- 7 227 826
- DE-U- 9 307 220
- US-A- 1 927 330
- US-A- 3 049 839
- US-A- 3 416 261

## Description

The present invention relates to a sanding machine, in particular for machining wooden panels and, further, to a method for sanding wooden panels.

Typically, sanding machines of this kind currently on the market envisage a support frame for a conveyor which transports the workpieces or panels being machined, said frame extending lengthways on a horizontal plane, and sanding means consisting of a set of parallel rollers, positioned crosswise and above the conveyor. Together with several hydraulic cylinders, these rollers subtend at least one sanding belt which is closed in such a way that it forms a loop around the rollers, and which is equipped with parts designed to press a portion of the belt towards the conveyor, that is to say, towards the panel to be machined.

These pressers, consisting of separately mounted shoes, are designed to define, by the pressure they apply to the sanding belt, the sanding action on the workpiece.

The panel being machined is fed into the machine manually by the operator, in the case of small craft workshops, or by means of automatic handling devices if the machine is part of a mass-production line.

In the first case, which is of particular interest to this document, the operator who feeds the panel into the sanding machine at the machine infeed zone, must then walk the length of the machine in order to reach the machine outfeed zone and pick up the machined panel. Alternatively, there may be two operators, one at the infeed zone and one at the outfeed zone of the machine, to respectively feed in successive panels and collect the panels machined.

This solution has disadvantages such as the considerable time required to load and unload the panels, with a negative effect on machine productivity, or the need for more operators at the machine, with obvious effects on the final cost of the machined panel; without considering the fact that more than one operator may not be available for each machine.

It is known from document US 3 416 261 a sanding and polishing machine in which a sheet material is automatically conveyed to a sanding head and, after sanding, is inverted and automatically carried to a second sanding head for finishing the other side. The machine includes two different conveyor belts, the first moving the sheet in a direction in order to machine it and the second moving the same sheet, in a inverted position, in the opposite direction. A second sanding unit is provided along the second conveyor belt in order to machine the second side of the sheet which is then delivered from the end of the machine.

In order to overcome these disadvantages, the Applicant has invented a sanding machine for wooden panels whose technical specifications allow the rapid loading - unloading of the panel at a single point of the machine itself, reducing downtimes, and with an extremely economic machine structure which is, therefore, particularly suitable for the small workshop market.

The invention is defined in claims 1 and 9, respectively. Claim 2 to 8, 10, 11 concer embodiments thereof. Their advantages are made clearer in the detailed description below, with reference to the accompanying drawings, which illustrate a preferred embodiment of the invention without in any way limiting its application, and in which:
- figure 1 is a schematic side view of the sanding machine for wooden panels disclosed, with some parts cut away to better illustrate others;
- figure 2 is a schematic side view of an alternative embodiment of the machine in figure 1;
- figures 3 and 4 are side views, enlarged relative to the previous drawings, of a detail of the previous drawings, respectively means for receiving and releasing a panel;
- figure 5 is a schematic plan view from above of the machine in figure 1.

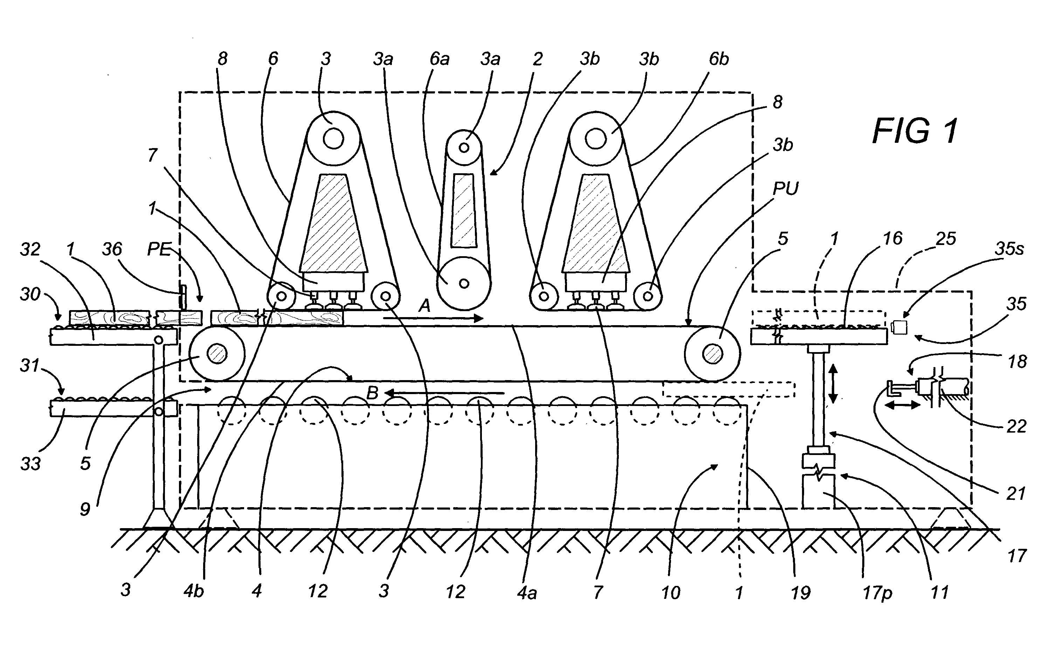

With reference to the accompanying drawings, and in particular figure 1, the sanding machine disclosed basically envisages a unit 2 for sanding wooden panels 1 which consists of one or more sets of first parallel rollers 3, positioned crosswise to and above a conveyor 4 for the panels 1.

In the preferred embodiment illustrated in figure 1, there are three sets of rollers, labelled 3, 3a and 3b, each of which subtends a corresponding sanding belt 6, 6a and 6b, said belts closed in a loop over the relative rollers 3, 3a and 3b and designed to make contact with the panel 1 as it passes. External belts 6 and 6b are also in contact with a plurality of shoes 7 placed by side-by-side, each of which is controlled and supported by pneumatic means 8, each being independent of the others, which move the shoe towards the belt 6 or 6b.

The afore-mentioned conveyor 4 is closed to form a loop around the second rollers 5, one of which is motor-driven, so that they move the wooden panel 1 along an active machining section of the conveyor 4a in the horizontal direction of feed indicated by arrow A. As shown in figure 1, the conveyor 4 transfers each panel 1 from a panel infeed point PE to a panel outfeed point PU in the sanding unit 2.

Below and parallel with the conveyor 4, an aisle 9 for the transit of the panel 1 previously machined on the active section 4a of the said conveyor is envisaged.

More specifically, the aisle 9 is formed by the lower section 4b of the conveyor 4 and by means 10 which support the panel 1: in this way, the movement of the conveyor 4 returns the panel 1 to the said infeed point PE in a direction B opposite to the afore-mentioned direction of feed A.

The support means 10 for the panel 1 may consist of (see figure 1 again) a plurality of idle rollers 12 which are evenly spaced along the aisle and over which the panel 1 slides. Each roller 12 is attached in such a way that it may turn, to a support structure 19 which may house pneumatic means that act upon each roller to obtain "flexibility" in the movement of the rollers 12 towards and away from the lower section 4b, if the aisle 9 should have to be adjusted to the thicknesses of the panels 1 being machined (said means are not illustrated, being of the known type).

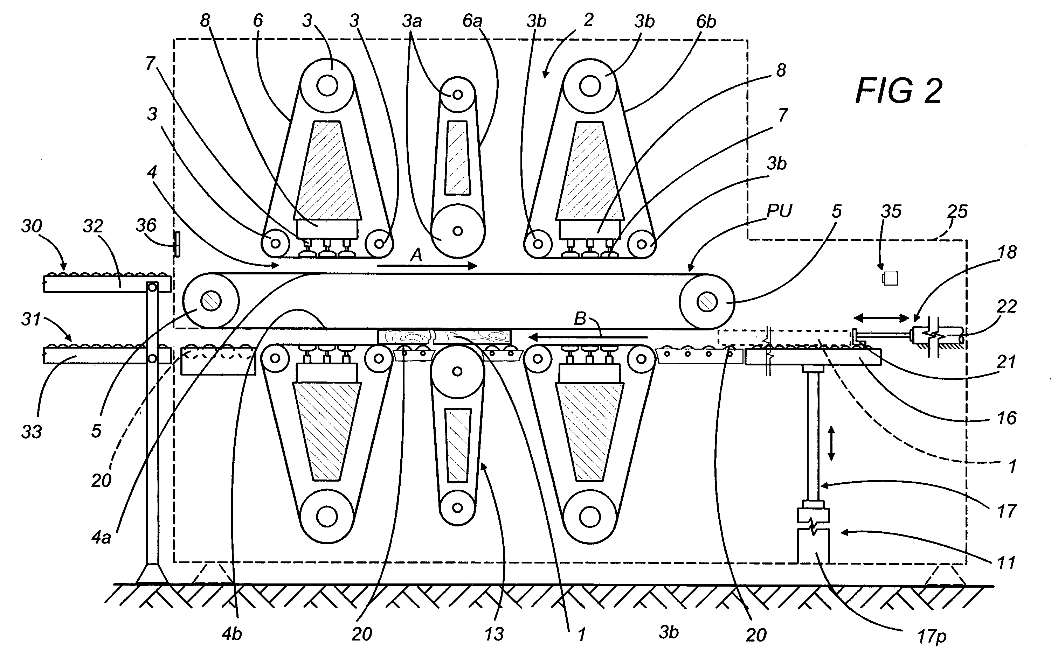

Figure 2 illustrates an alternative embodiment of the support means 10, which consist of a second sanding unit 13 for the panel 1, designed to work on the surface of the panel that was not machined by the first sanding unit 2. In the embodiment shown, the second unit 13 is similar to the first 2, and is positioned so that it mirrors the latter; idle rollers 20 being envisaged in the gaps between the sanding belts, allowing the definition of a continuous surface for the panel 1 in transit.

The numeral 11 is used to indicate means for receiving and releasing the panel 1 machined by the first sanding unit 2. These means 11 are located downstream of the sanding unit so as to feed the panel 1 out of the active section 4a, then into the aisle 9.

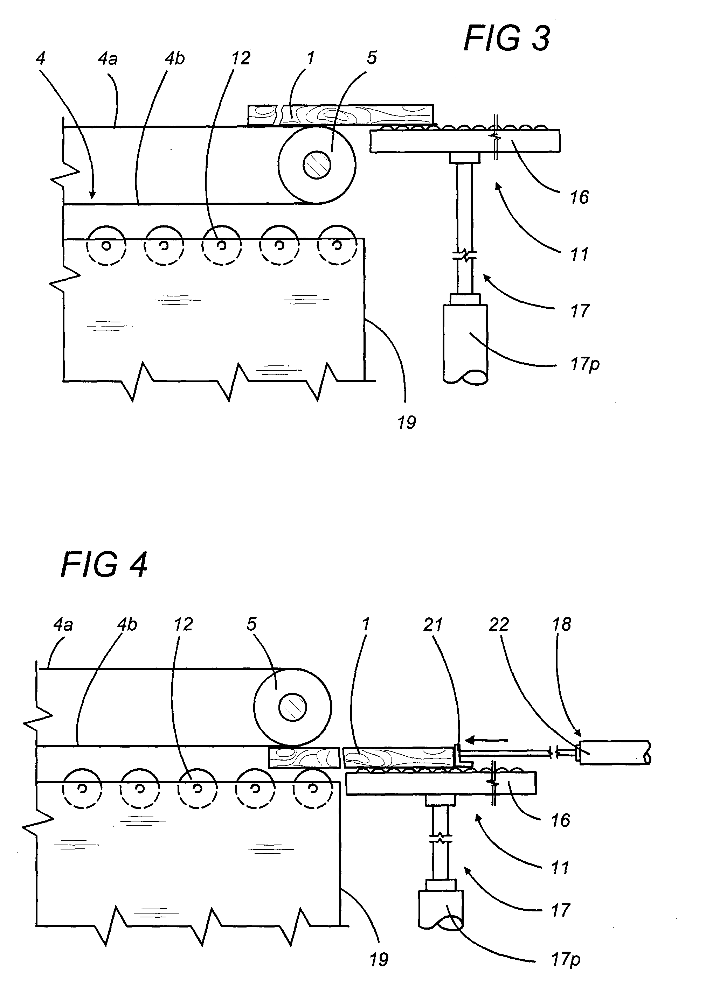

In the embodiment shown in figures 1 to 4, the receiving and releasing means 11 consist of a lifter 16 with horizontal surface. The lifter 16 is moved, by relative means 17, from a raised position in which it receives the panel 1 machined and in which the lifter 16 is on the same plane as the active section 4a (see figure 3 in particular), to a lowered position in which it releases the panel 1, and in which the lifter 16 is on the same plane as the support means 11 (rollers or the second sanding unit) for the panel 1. The said drive means 17 may consist of a piston 17p which moves the horizontal surface of the lifter.

Panel pusher means 18 are envisaged to make the panel 1 enter the aisle 9; said means 18 may consist of a vertical plate 21 designed to make contact with the panel 1, said plate being integral with a pusher 22 which is attached to a fixed structure 25 of the machine. Obviously, the pusher 22 is activated when the lifter 16 arrives in the afore-mentioned lowered position, so that the panel 1 is pushed into the infeed of the aisle 9, where it is taken up and moved by the lower section 4b of the conveyor 4. In the embodiment illustrated in the accompanying drawings, only one panel 1 is shown, although the extent of the downstroke of the lifter 16 is, obviously, adjusted to create, on the horizontal surface, a stack of panels 1 arriving one after another from the active section 4a.

Similarly, when the lifter 16 is completely lowered and the top panel 1 of the stack thus formed is on the same plane as the rollers 12 or second sanding unit 13, the lifter waits until the panel 1 is pushed towards the aisle 9 by the means 18, then rises until the next panel 1 is brought into a similar position for infeed into the aisle 9.

To ensure that the correct number of panels 1 are stacked on the lifter 16, means 35 are envisaged which detect the position of the lifter, acting upon the feed of the conveyor 4 at the infeed point PE: when the lifter has picked up the first of the panels 1 machined and descends to stack another, the means 35, which may be position sensors 35s for the lifter 16, "detect" that the lifter has moved away and send a pulse to a control box on the machine (not illustrated here) which ensures that when the last panel 1 has passed over the conveyor 4, the infeed of other panels 1 is inhibited (e.g.: by lowering a door 36 near the infeed point PE).

The infeed of new panels 1 is reset only when the lifter has returned to its raised position.

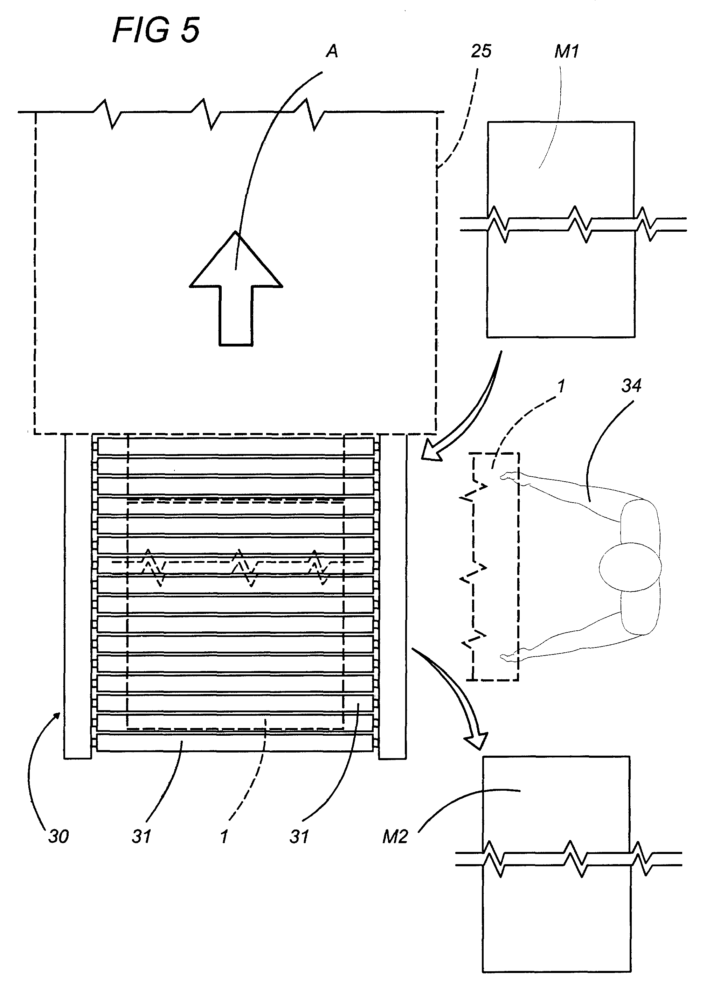

In figures 1 and 5 the numerals 30 and 31 indicate a station for the loading and feed of the panels 1 to be machined and, respectively, a station for unloading the panels 1. Both stations are located on the exterior of the machine (that is to say, the external structure 25), at the machine infeed zone PE.

Loading station 30 is coplanar with and connected to the active section 4a of the conveyor 4, whilst the unloading station 31 for the panels 1 machined is parallel with and below the loading station 30, so that it can receive the panels 1 feeding out of the aisle 9.

In the embodiment illustrated, the two stations 30 and 31 consist of respective fixed roller surfaces 32 and 33: the operator 34 places the panels 1 to be machined (taken from a magazine M1) on the first surface 32 and pushes them towards the conveyor 4, whilst the panels 1 which have been machined are released onto the second surface 33 as they feed out of the machine and are picked up by the same operator 34 and stacked in a temporary magazine M2 located near the operator.

The sanding machine, with the said configuration, operates as follows.

After adjusting the position of the sanding belts 6, 6a and 6b, the operator 34 on one side feeds a series of panels 1 onto the roller surface 32, then pushes them into the machine through an opening in the support structure 25 which forms the said infeed point PE. Here, the panels 1 are taken, one after the other, by the conveyor 4 and fed towards the sanding unit 2 which carries out the relative machining on one surface, until the line is full.

After passing the sanding unit 2, each panel 1 is moved on until it rests fully on the lifter 16 (see figures 1 and 3) which is in the raised receiving position. After forming a stack of panels 1, the lifter 16 moves to its lowered position, releasing the panels 1 in the direction of the aisle 9 (as shown by the dashed line in figure 1, and in figure 4); here, the panels 1 move thanks to their contact with the lower section 4b of the conveyor 4 which, continuing its rotation in order to move, preferably, a second series of panels 1 on the upper active section 4a, allows the first series of panels 1 machined to move in direction of feed B, the lower face of the panels resting on the idle rollers 12.

In the embodiment illustrated in figure 2, the panels 1 machined, not only return to the infeed point PE, but are also machined by the second sanding unit 13 on the surface which has not yet been sanded.

Then, each panel is fed out of the sanding machine at the same point at which it was fed in and rests on the roller surface 33, from which it is picked up by the operator who fed it into the machine, not occupied with loading operations, since the machine is momentarily paused or is loading the panels 1 already in position at the loading station 30.

The present machine fulfils the objects thanks to a compact, economic and relatively simple structure, in which a single operator, remaining at the same working position, is able to load the panels to be machined and unload the machined panels without moving from his/her position, thus avoiding the need for a second operator.

Many advantages are gained by exploiting the lower aisle, including the use of a single panel transfer element, that is to say, the two sections of the conveyor, thus reducing the space required and making it possible to exploit the return stroke as a machining stroke in the presence of a second sanding unit.

If no second sanding unit is present, the return stroke of the panel machined is still effected during the machining stroke of a second panel, and so in "masked time".

## Claims

1. A sanding machine for machining wooden panels (1), said machine including at least one panel sanding unit (2), consisting of at least one first set of parallel rollers (3), being positioned crosswise and above a conveyor (4) which is closed to form a loop over the second rollers (5), at least one of the latter being motor-driven; said first set of rollers (3) subtending at least one sanding belt (6), the belt being closed to form a loop over the first rollers and designed to make contact with the panel (1); said conveyor (4) moving the wooden panels (1) along its own active machining section (4a) in a horizontal direction of feed (A) from an infeed point (PE) for the panels (1) to an out-feed point (PU) from the sanding unit (2); an aisle (9) for the transit of the machine panel (1), the aisle being positioned parallel with and below the conveyor (4); the aisle including means which support and move the panel (1), allowing it to move towards the infeed point (PE) in a direction (B) opposite to the direction of feed (A); means (11) which receive and release the machined panel (1) being envisaged downstream of said sanding unit (2) and being intended to allow the panel to be fed out of the active section (4a) and to allow said panel (1) to be fed into the aisle (9), whereby
the lower section (4b) of the conveyor (4) serves for moving the panels (1) along the aisle.

2. The machine as described in claim 1, **characterised in that** the aisle includes a plurality of elements upon which the panel (1) rests and slides (12), said elements being opposite the lower section (4b) and forming the support means (10).

3. The machine as described in claim 1, **characterised in that** the aisle includes a second sanding unit (13) which operates upon the surface of the panel (1) not already machined by the first sanding unit (2), said second sanding unit (13) being positioned in such a way that it mirrors the first sanding unit (2) and being part of the support means (10).

4. The machine as described in claim 1, **characterised in that** said means (11) for receiving and releasing the machined panel (1) carry out a translation of said panel (1) from the out-feed point (PU) of the active section (4a) to the aisle (9), so as to hold the same position of the panel machined surface.

5. The machine as described in claim 4, **characterised in that** the means (11) for receiving and releasing the panels consist of a lifter (16), having a horizontal surface which is moved, by relative means (17) from a raised position in which it receives at least one machined panel (1), and in which the lifter (16) is coplanar with the active section (4a) of the conveyor (4), and a lowered position in which it releases at least one of the said panels (1), and in which the lifter is coplanar with the panel support means (11); means (18) for moving the panel (1) being envisaged, acting upon the panel when the lifter (16) is in the lowered position, said means being able to feed the panel (1) into the infeed of the aisle (9).

6. The machine as described in claim 5, **characterised in that** means (35) are envisaged to detect the position of the lifter (16), said means being located near the lifter and being able to inhibit the infeed of other panels (1) onto the active section (4a) of the conveyor (4) when the lifter (16) has moved.

7. The machine as described in claim 1, **characterised in that** it envisages a station (30) for the loading and feed of the panels (1) to be machined, being on the exterior of the machine at the infeed zone (PE) and being coplanar with the active section (4a) of the conveyor (4); there being at the said infeed zone (PE) also an unloading station (31) for the machined panels (1), being parallel with and below the loading station (30) and designed to receive the panels (1) as they are fed out of the aisle (9).

8. The machine as described in claim 7 **characterised in that** the loading station (30) and unloading station (31) consist of respective fixed roller surfaces (32, 33), on which the panels (1) to be machined are placed and pushed, and onto which the machined panels (1) are released when they are fed out of the machine.

9. A method for sanding wooden panels, said sanding being carried out by a machine which includes at least one panel sanding unit (2) for the panels (1), consisting of at least one first set of parallel rollers (3), being positioned crosswise to and above a conveyor (4) which is closed to form a loop over the second rollers (5), at least one of the latter being motor-driven; said first set of rollers (3) subtending at least one sanding belt (6), which is closed to form a loop over the first rollers and designed to come into contact with the panel (1); said conveyor (4) moving the wooden panels (1) along its own active machining section (4a) in a horizontal direction of feed (A) from an in-feed point (PE) for the panels (1) to an out-feed point (PU) for the panels (1) feeding out of the sanding unit (2); the method comprising the following stages:
a)inserting at least one panel (1) in the machine, at the in-feed point (PE), so that the panel (1) rests upon the active section (4a);
b) feeding and sanding one surface of said panel (1) by passing the panel through the sanding unit (2);
c) feeding the panel (1) out from the active section (4a) of the conveyor (4) and subsequent positioning the panel (1) in a zone below the conveyor (4);
d) transferring the panel (1) by means of the lower section (4b) of the conveyor (4) in a direction of feed (B) parallel with and opposite to the machining direction of feed (A), so as to bring the panel (1) to the in-feed point (PE).
d) transferring the panel (1) by means of the lower section (4b) of the conveyor (4) in a direction of feed (B) parallel with and opposite to the machining direction of feed (A), so as to bring the panel (1) to the in-feed point (PE).

10. The method as described in claim 9, **characterised in that** stage d) envisages a second machining process, on the surface of the panel (1) which was not machined by the first sanding unit (2).

11. The method as described in claim 9, **characterised in that** positioning the panel (1) consists in a translation of the panel (1) from the out-feed point (PU) of the active section (4a) to the zone below the conveyor (4) so as to hold the same position of the panel machined surface.

## Patentansprüche

1. Schleifmaschine zum Bearbeiten von Holzpaneelen (1), wobei die genannte Maschine wenigstens eine Paneel-Schleifeinheit (2) enthält, bestehend aus wenigstens einem ersten Satz von parallelen Rollen (3), welche querverlaufend zu und oberhalb eines Förderers (4) angeordnet sind, der ringförmig geschlossen über die zweiten Rollen (5) läuft, wobei wenigstens eine der letzteren angetrieben ist; wobei der genannte erste Satz von Rollen (3) wenigstens ein Schleifband (6) unterspannt, das Band ringförmig um die ersten Rollen geschlossen und dazu bestimmt ist, mit dem Paneel (1) in Kontakt zu kommen; wobei der genannte Förderer (4) die Holzpaneele (1) entlang seinem eigenen aktiven Bearbeitungsabschnitt (4a) in einer horizontalen Vorschubrichtung (A) von einem Einlaufpunkt (PE) für die Paneele (1) zu einem Auslaufpunkt (PU) aus der Schleifeinheit (2) vorschiebt; wobei ein Durchgang (9) für den Durchlauf des bearbeiteten Paneels (1) vorgesehen ist, welcher Durchgang parallel zu und unterhalb des Förderers (4) angeordnet ist; wobei der Durchgang Mittel enthält, welche das Paneel (1) tragen und vorschieben und es diesem erlauben, sich zu dem Einlaufpunkt (PE) hin in einer Richtung (B) entgegengesetzt zu der Vorschubrichtung (A) zu bewegen; und wobei Mittel (11), welche die bearbeiteten Paneele (1) aufnehmen und freigeben, stromabwärts der genannten Schleifeinheit (2) vorgesehen sind, die dazu dienen, es dem Paneel zu erlauben, aus dem aktiven Abschnitt (4a) herausgeführt zu werden, und die es dem genannten Paneel (1) ebenfalls erlauben, in den Durchgang (9) geleitet zu werden, in welchem der untere Abschnitt (4b) der Förderers (4) zum Bewegen der Paneele (1) entlang des Durchgangs dient.

2. Maschine nach Patentanspruch 1, **dadurch gekennzeichnet, dass** der Durchgang eine Anzahl von Elementen (12) enthält, auf denen das Paneel (1) aufliegt und gleitet, wobei die genannten Elemente dem unteren Abschnitt (4b) gegenüber liegen und die Tragmittel (10) bilden.

3. Maschine nach Patentanspruch 1, **dadurch gekennzeichnet, dass** der Durchgang eine zweite Schleifeinheit (13) enthält, welche an der Oberfläche des Paneels (1) arbeitet, die noch nicht von der ersten Schleifeinheit (2) bearbeitet wurde, wobei die genannte zweite Schleifeinheit (13) auf solche Weise angeordnet ist, dass sie die erste Schleifeinheit (2) spiegelt und Teil der Tragmittel (10) ist.

4. Maschine nach Patentanspruch 1, **dadurch gekennzeichnet**, dass die genannten Mittel (11) zur Aufnahme und Freigabe des bearbeiteten Paneels (1) eine Verschiebung des genannten Paneels (1) von dem Auslaufpunkt (PU) aus dem aktiven Abschnitt (4a) zu dem Durchgang (9) ausführen, so dass dieselbe Position der Oberfläche des bearbeiteten Paneels beibehalten wird.

5. Maschine nach Patentanspruch 4, **dadurch gekennzeichnet, dass** die Mittel (11) zur Aufnahme und Freigabe der Paneele aus einer Hebevorrichtung (16) bestehen, die mit einer horizontalen Oberfläche versehen ist, welche durch entsprechende Mittel (17) aus einer angehobenen Position, in welcher sie wenigstens ein bearbeitetes Paneel (1) aufnimmt, und in welcher die Hebevorrichtung (16) koplanar mit dem aktiven Abschnitt (4a) des Förderers (4) ist, in eine gesenkte Position, in welcher sie wenigstens eins der genannten Paneele (1) freigibt, und in welcher die Hebevorrichtung koplanar mit den Tragmitteln (11) des Paneels ist, bewegt wird; wobei Mittel (18) zum Bewegen des Paneels (1) vorgesehen sind, die auf das Paneel wirken, wenn sich die Hebevorrichtung (16) in der gesenkten Position befindet, und wobei die genannten Mittel in der Lage sind, das Paneel (1) in den Eintritt des Durchgangs (9) zu leiten.

6. Maschine nach Patentanspruch 5, **dadurch gekennzeichnet, dass** Mittel (35) vorgesehen sind, um die Position der Hebevorrichtung (16) abzutasten, wobei die genannten Mittel in der Nähe der Hebevorrichtung angeordnet und in der Lage sind, das Einlaufen anderer Paneele (1) in den aktiven Abschnitt (4a) des Förderers (4) zu verhindern, wenn sich die Hebevorrichtung (16) bewegt hat.

7. Maschine nach Patentanspruch 1, **dadurch gekennzeichnet, dass** sie eine Station (30) zum Laden und Zuführen der zu bearbeitenden Paneele (1) vorsieht, die sich ausserhalb der Maschine an dem Einlaufbereich (PE) und koplanar mit dem aktiven Abschnitt (4a) des Förderers (4) befindet; wobei sich an dem genannten Einlaufbereich (PE) auch eine Entladestation (31) für die bearbeiteten Paneele (1) befindet, welche parallel zu und unterhalb der Ladestation (30) angeordnet und dazu bestimmt ist, die Paneele (1) aufzunehmen, sobald sie aus dem Durchgang (9) herauskommen.

8. Maschine nach Patentanspruch 7, **dadurch gekennzeichnet**, dass die Ladestation (30) und die Entladestation (31) aus jeweiligen feststehenden Rollenflächen (32, 33) bestehen, auf welche die zu bearbeitenden Paneele (1) gelegt und vorgeschoben werden, und auf welche die bearbeiteten Paneele (1) freigegeben werden, wenn sie aus der Maschine herauskommen.

9. Verfahren zum Schleifen von Holzpaneelen, wobei das Schleifen von einer Maschine ausgeführt wird, welche wenigstens eine Schleifeinheit (2) für die Paneele (1) enthält, bestehend aus wenigstens einem ersten Satz von parallelen Rollen (3), welche querverlaufend zu und oberhalb eines Förderers (4) angeordnet sind, der ringförmig geschlossen über die zweiten Rollen (5) läuft, wobei wenigstens eine der letzteren angetrieben ist; wobei der genannte erste Satz von Rollen (3) wenigstens ein Schleifband (6) unterspannt, das Band ringförmig um die ersten Rollen geschlossen und dazu bestimmt ist, mit dem Paneel (1) in Kontakt zu kommen; wobei der genannte Förderer (4) die Holzpaneele (1) entlang seinem eigenen aktiven Bearbeitungsabschnitt (4a) in einer horizontalen Vorschubrichtung (A) von einem Einlaufbereich (PE) für die Paneele (1) zu einem Auslaufbereich (PU) für die aus der Schleifeinheit (2) kommenden Paneele (1) bewegt; wobei das Verfahren die folgenden Phasen enthält:
a) Einführen von wenigstens einem Paneel (1) in die Maschine an dem Einlaufpunkt (PE), so dass das Paneel (1) auf dem aktiven Abschnitt (4a) aufliegt;
b) Vorlaufen und Schleifen einer Oberfläche des genannten Paneels (1) durch das Durchlaufen des Paneels durch die Schleifeinheit (2);
c) Auslaufen des Paneels (1) aus dem aktiven Abschnitt (4a) des Förderers (4) und anschliessendes Positionieren des Paneels (1) in einem Bereich unterhalb des Förderers (4);
d) Weiterleiten des Paneels (1) mit Hilfe des unteren Abschnittes (4b) des Förderers (4) in einer Vorschubrichtung (B) parallel und entgegengesetzt zu der Vorschubrichtung der Bearbeitung (A), so dass das Paneel (1) an den Einlaufpunkt (PE) gebracht wird.

10. Verfahren nach Patentanspruch 9, **dadurch gekennzeichnet, dass** die Phase d) einen zweiten Bearbeitungsprozess vorsieht, und zwar an der Oberfläche des Paneels (1), welche noch nicht von der ersten Schleifeinheit (2) bearbeitet wurde.

11. Verfahren nach Patentanspruch 9, **dadurch gekennzeichnet**, dass die Positionierung des Paneels (1) aus einem Weiterleiten des Paneels (1) von dem Auslaufpunkt (PU) aus dem aktiven Abschnitt (4a) in den Bereich unterhalb des Förderers (4) besteht, so dass dieselbe Position der bearbeiteten Oberfläche des Paneels beibehalten wird.

## Revendications

1. Une machine à poncer pour l'usinage de panneaux en bois **(1)** équipée d'au moins un groupe **(2)** de ponçage desdits panneaux, comprenant au moins une première série de rouleaux parallèles **(3)** disposés transversalement au-dessus d'un transporteur **(4)** fermé en anneau et situé au-dessus de seconds rouleaux **(5)**, dont un au moins est entraîné par un moteur ; ladite première série de rouleaux **(3)** sous-tendant au moins une bande abrasive **(6)**, fermée en anneau sur les premiers rouleaux et destinée à entrer en contact avec le panneau **(1)** ; ledit transporteur **(4)** acheminant les panneaux en bois **(1)** le long de sa partie active de ponçage **(4a)** dans une direction d'avance horizontale **(A)** à partir d'un point d'entrée **(PE)** des panneaux **(1)** jusqu'à un point de sortie **(PU)** du groupe de ponçage **(2)** ; un couloir **(9)** pour le passage du panneau poncé **(1)**, ledit couloir étant parallèle et sous-jacent au transporteur (4) ; le couloir comprenant des moyens de support et d'acheminement du panneau **(1)**, lui permettant d'avancer vers le point d'entrée **(PE)** dans une direction **(B)** opposée à la direction d'avance **(A)** ; des moyens **(11)** qui reçoivent et libèrent le panneau poncé **(1)** étant prévus en aval dudit groupe de ponçage **(2)** pour permettre la sortie du panneau de la partie active **(4a)** ainsi que l'entrée dudit panneau **(1)** dans le couloir **(9)**, où la partie inférieure **(4b)** du transporteur **(4)** sert à déplacer les panneaux **(1)** le long du couloir.

2. La machine selon la revendication **1**, **caractérisée en ce que** le couloir comporte une série d'éléments sur lesquels le panneau **(1)** s'appuie et glisse **(12)**, lesdits éléments étant montés en face de la partie inférieure **(4b)** et formant les moyens de support **(10)**.

3. La machine selon la revendication **1**, **caractérisée en ce que** le couloir comporte un second groupe de ponçage **(13)** qui agit sur la surface du panneau **(1)** avant qu'elle ne soit poncée par ledit premier groupe de ponçage **(2)**, ledit second groupe de ponçage **(13)** étant monté symétriquement au premier groupe de ponçage **(2)** et faisant partie des moyens de support **(10)**.

4. La machine selon la revendication **1**, **caractérisée en ce que** lesdits moyens **(11)** de réception et de libération du panneau poncé **(1)** assurent la translation dudit panneau **(1)** depuis le point de sortie **(PU)** de la partie active **(4a)** jusqu'au couloir **(9)**, de manière à maintenir la face poncée du panneau dans la même position.

5. La machine selon la revendication **4**, **caractérisée en ce que** lesdits moyens **(11)** de réception et de libération des panneaux consistent en un élévateur **(16)**, présentant une surface horizontale qui se déplace sous l'action de moyens **(17)** entre une position haute où elle reçoit au moins un panneau poncé **(1)** et où l'élévateur **(16)** se trouve sur le même plan que la partie active **(4a)** du transporteur **(4)**, et un position basse où elle libère au moins l'un desdits panneaux **(1)** et où l'élévateur se trouve sur le même plan que les moyens de support **(10)** des panneaux ; des moyens **(18)** de déplacement du panneau **(1)** étant prévus et agissant sur le panneau lorsque l'élévateur **(16)** se trouve dans la position basse, lesdits moyens étant en mesure d'introduire le panneau **(1)** dans l'entrée du couloir **(9)**.

6. La machine selon la revendication **5**, **caractérisée en ce que** des moyens **(35)** sont prévus pour détecter la position de l'élévateur **(16)**, lesdits moyens étant situés près de l'élévateur et ayant la possibilité d'empêcher l'entrée d'autres panneaux **(1)** sur la partie active **(4a)** du transporteur **(4)** lorsque l'élévateur **(16)** s'est déplacé.

7. La machine selon la revendication **1**, **caractérisée en ce qu'**une station **(30)** de chargement et d'alimentation des panneaux **(1)** à poncer est prévue à l'extérieur de la machine dans la zone d'entrée **(PE)** et sur le même plan que la partie active **(4a)** du transporteur **(4)** ; toujours dans ladite zone d'entrée **(PE)**, une station de déchargement **(31)** des panneaux poncés **(1)** est également prévue, ladite station de déchargement **(31)** étant parallèle et sous-jacente à la station de chargement **(30)** et étant destinée à recevoir les panneaux **(1)** à mesure qu'ils sortent du couloir **(9)**.

8. La machine selon la revendication **7**, **caractérisée en ce que** la station de chargement **(30)** et la station de déchargement **(31)** sont respectivement constituées par des surfaces fixes à rouleaux **(32, 33)**, sur lesquelles les panneaux **(1)** à poncer sont posés et poussés et les panneaux poncés **(1)** sont libérés pour permettre leur sortie de la machine.

9. Un procédé de ponçage de panneaux en bois, ledit procédé étant mis en oeuvre par une machine qui comprend au moins un groupe de ponçage **(2)** des panneaux **(1)**, consistant en au moins une première série de rouleaux parallèles **(3)**, disposés transversalement au-dessus d'un transporteur **(4)** fermé en anneau et situé au-dessus de seconds rouleaux **(5)**, dont un au moins est entraîné par un moteur ; ladite première série de rouleaux **(3)** sous-tendant au moins une bande abrasive **(6)**, fermée en anneau sur les premiers rouleaux et destinée à entrer en contact avec le panneau **(1)** ; ledit transporteur **(4)** acheminant les panneaux en bois **(1)** le long de sa partie active de ponçage **(4a)** dans une direction d'avance horizontale **(A)** à partir d'un point d'entrée **(PE)** des panneaux **(1)** jusqu'à un point de sortie **(PU)** du groupe de ponçage **(2)** ; ledit procédé comprenant les phases suivantes :
a) introduction d'au moins un panneau **(1)** dans la machine au niveau du point d'entrée **(PE)**, de manière à ce que le panneau **(1)** s'appuie sur la partie active **(4a)** ;
b) avance et ponçage d'une face dudit panneau **(1)** en faisant passer le panneau à travers le groupe de ponçage **(2)** ;
c) sortie du panneau **(1)** de la partie active **(4a)** du transporteur **(4)** et positionnement du panneau **(1)** dans une zone au-dessous du transporteur **(4)** ;
d) transfert du panneau **(1)** par l'intermédiaire de la partie inférieure **(4b)** du transporteur **(4)** dans une direction d'avance **(B)** parallèle et opposée à la direction de ponçage **(A)**, de manière à amener le panneau **(1)** jusqu'au point d'entrée **(PE)**.

10. Le procédé selon la revendication **9**, **caractérisé en ce que** la phase d) prévoit un second ponçage sur la face du panneau **(1)** qui n'avait pas été poncée par le premier groupe de ponçage **(2)**.

11. Le procédé selon la revendication **9**, **caractérisé en ce que** le positionnement du panneau **(1)** consiste en une translation de ce panneau **(1)** depuis le point de sortie **(PU)** de la partie active **(4a)** jusqu'à la zone située au-dessous du transporteur **(4)**, de manière à maintenir la face poncée du panneau dans la même position.
